(19) Europäisches Patentamt / European Patent Office / Office européen des brevets

(11) **EP 1 500 211 B1**

(12) **EUROPEAN PATENT SPECIFICATION**

(45) Date of publication and mention
of the grant of the patent:
**09.07.2008 Bulletin 2008/28**

(51) Int Cl.:
***H04B 3/54*** (2006.01)

(21) Application number: **02765657.8**

(22) Date of filing: **16.09.2002**

(86) International application number:
**PCT/KR2002/001731**

(87) International publication number:
**WO 2003/094382 (13.11.2003 Gazette 2003/46)**

(54) **ADAPTER FOR COMMUNICATING OVER POWER LINE**

ADAPTER ZUR KOMMUNIKATION ÜBER STROMVERSORGUNGSLEITUNGEN

ADAPTATEUR PERMETTANT LA COMMUNICATION SUR UNE LIGNE D'ENERGIE ELECTRIQUE

(84) Designated Contracting States:
**AT BE BG CH CY CZ DE DK EE ES FI FR GB GR IE IT LI LU MC NL PT SE SK TR**

(30) Priority: **30.04.2002 KR 2002023599**

(43) Date of publication of application:
**26.01.2005 Bulletin 2005/04**

(73) Proprietor: **DUNOTECH PLC**
**London W1U 2HQ (GB)**

(72) Inventors:
 • **NO, Moon-Young**
 **Garakbon-dong,**
 **Songpa-gu,**
 **138-804 Seoul (KR)**
 • **RO, Chung-Yoon**
 **Suwon-si,**
 **441-703 Gyeonggi-do (KR)**

(74) Representative: **Dowler, Edward Charles et al**
**HLBBshaw**
**10th Floor**
**1 Hagley Road**
**Birmingham B16 8TG (GB)**

(56) References cited:
| | |
|---|---|
| EP-A2- 0 632 602 | GB-A- 2 116 406 |
| US-A- 4 896 349 | US-A- 5 873 638 |
| US-A- 6 102 491 | US-B1- 6 317 028 |

• **PATENT ABSTRACTS OF JAPAN vol. 014, no. 560 (E-1012), 13 December 1990 (1990-12-13) & JP 02 243094 A (NEW COSMOS ELECTRIC CORP), 27 September 1990 (1990-09-27)**
• **COHEN A A: "LONG-DISTANCE DIGITAL INTERFACE SYSTEM OVERCOMES NOISE" ELECTRONIC ENGINEERING, MORGAN-GRAMPIAN LTD. LONDON, GB, vol. 45, no. 542, April 1973 (1973-04), pages 57-59, XP000761053 ISSN: 0013-4902**

**Description**

**Technical Field**

The present invention relates to an adapter for communicating over power line, and in particular to an adapter for communicating over power line which minimizes signal attenuation and noise effect of transmission lines in time of signal transmission and reception using power lines by applying a transformer having a condenser component between the power lines and a modem.

**Background Art**

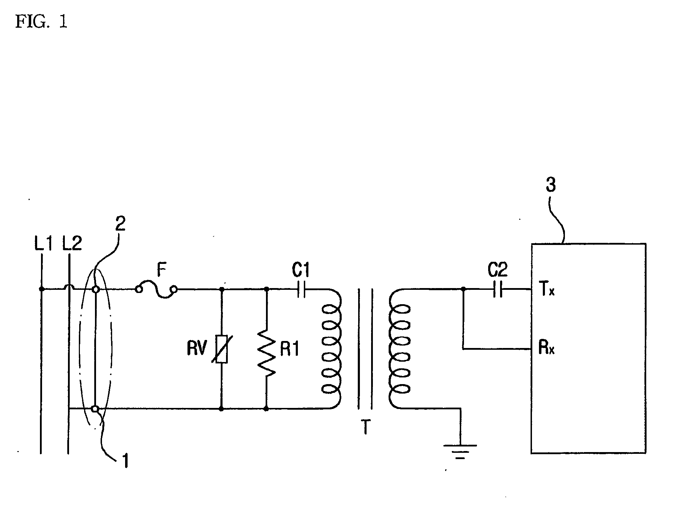

Power line communications technology is for enabling super high speed internet, home networking, home automation, or remote automatic control, etc., at a moderate expense using widely built power lines. It transmits signals by carrying a different frequency band of 1MHz ~ 50MHz over a common alternating current in a frequency band of 50Hz - 60Hz running through the power lines and enables communication and control by filtering out the carried frequency band from the transmitted signals in the receiver. Here, the adapter for power line communications is used for signal adding and dropping when transmitting and receiving signals. The adapter, as shown in Fig. 1, comprises two terminals 1, 2 for being connected to power lines L1, L2, a fuse F, a surge discharger RV, a resistor R1, a transformer T and condensers C1, C2 positioned between the terminals 1,2 and a power line modem 3.

Here, the fuse F and surge discharger RV are for protecting circuits from abnormal currents and voltages provoked in the power lines L1, L2 by a surge and thunderbolt, etc. The resistor R1 is for discharging by the surge discharger RV The transformer T is for use in high frequencies and employs an insulating transformer whose first and second coils are combined in a mutually insulated state. It is for transforming data frequencies by mutual induction. One end of the first coil of the transformer T is connected to the one terminal 1 via the condenser C1 and fuse F, and the other end is directly connected to the other terminal 2. One end of the second coil is connected to a transmitting port Tx of the power line modem 3 via the condenser C2 and connected simultaneously and directly to a receiving port Rx, and the other end of the second coil is earthed. The condenser C1, belonged to the circuit of the first coil side of the insulating transformer T, performs a band pass filtering function for separating the received frequencies through the power lines L1, L2 from the common frequencies of the power lines and matches their impedance with the one of the circuit. The condenser C2 of the second coil side of the insulating transformer T is for filtering out the direct current to remove a DC bias of the signals output from the transmitting port Tx of the power line modem 3.

As described above, the conventional power line communication adapter employs the transformer T for signal transmission and reception as an intermediate component in a short and long distance data transmission and reception process. However, there is a limit for a long distance transmission, when using a conventional transformer structure, because the data signals are transmitted and received in frequencies of tens or hundreds MHz. Since the power line communications employs power lines as medium, it is difficult to be implemented compared with data transmissions using communication cables or optical fibers. That is due to high loads, interference, noise, a varying impedance and signal attenuation. Since an internal impedance is limited by winding times of the first and second coils in the conventional transformer T, there occurs limits on signal transmission when transmitting the signals in several hundred meters

**Disclosure of Invention**

It is, therefore, an object of the present invention to provide an adapter for communicating over power line which minimizes effects of signal attenuation and noise of transmission lines by positioning transformers having condenser components between power lines and a modem, that is, by comprising two condenser electrodes connected to power lines respectively in a second coil side and combined without contact to be a capacitor when transmitting the signals, and by preparing another two condenser electrodes connected to power lines respectively in a first coil side and combined without contact to be a capacitor when receiving the signals.

To achieve the above objects, there is provided an adapter for communicating over power line, comprising; a transmitting unit comprising; a transformer, connected to power lines, for dropping an input AC high voltage to an AC low voltage; a plurality of rectifiers for rectifying the AC low voltage to convert the same to a DC voltage; a smoother for smoothing the DC voltage; an oscillator for oscillating a carrier frequency for signal transmission; a switching unit for switching corresponding to a signal transmitted from a modem; a first coil, positioned between the switching unit and the oscillator, for combining the carrier frequency and data transmitted from the switching unit and magnetizing the combined result; and a first pulse transformer comprising first and second condenser electrodes, which are induced electromagnetically by the first coil and separated mutually and electrically by means of dielectrics or insulators, including first and second lead lines respectively, each connected to the power lines for signal transmission; and a receiving unit comprising; a second pulse transformer comprising a third condenser electrode for connecting a third lead line to the power line to which the first lead line is connected, a fourth condenser electrode for preventing short with the third condenser electrode by means of dielectrics or insulators and connecting a fourth lead line to the power line to which the second lead line is connected, and a second coil induced electromagnetically by the third and fourth condenser electrodes; a filter for passing the carrier frequency of data among signals output from the second pulse transformer; and a data separating unit for separating transmission data between the filter and the modem. Here, the data separating unit is an LC filter.

**Brief Description of Drawings**

The above and other objects, features and advantages of the present invention will become more apparent from the following detailed description when taken in conjunction with the accompanying drawings in which:

FIG. 1 is a circuit diagram for a related adapter for communicating over power line according to the prior art;
FIG. 2 is a circuit diagram for an adapter for communicating over power line according to an embodiment of the present invention;
FIG. 3 shows a configuration of a pulse transformer applied to the adapter for communicating over power line;
FIG. 4 is an equivalent serial resonant circuit diagram corresponding to A of Fig. 3;
FIG. 5 is a schematic diagram for a pulse transformer wound around a bedded iron core;
FIG. 6 shows a configuration of a pulse transformer of the second coil side;
FIG. 7 shows the other configuration of the pulse transformer;
FIG. 8 shows a waveform of a carrier frequency output from P1 point of FIG. 2.
FIG. 9 shows a waveform of a carrier frequency output from P2 point of FIG. 2.

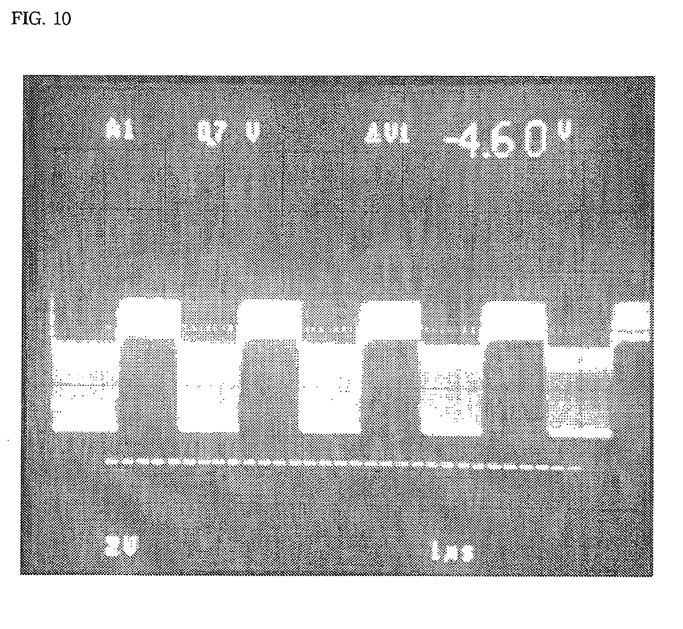

FIG 10 shows a synthesized waveform of a carrier frequency and a data signal output from P3 point of FIG. 2.

**Best Mode for Carrying Out the Invention**

A preferred embodiment of the present invention will be described herein below with reference to the accompanying drawings. In the following description, well-known functions or constructions are not described in detail since they would obscure the invention in unnecessary detail.

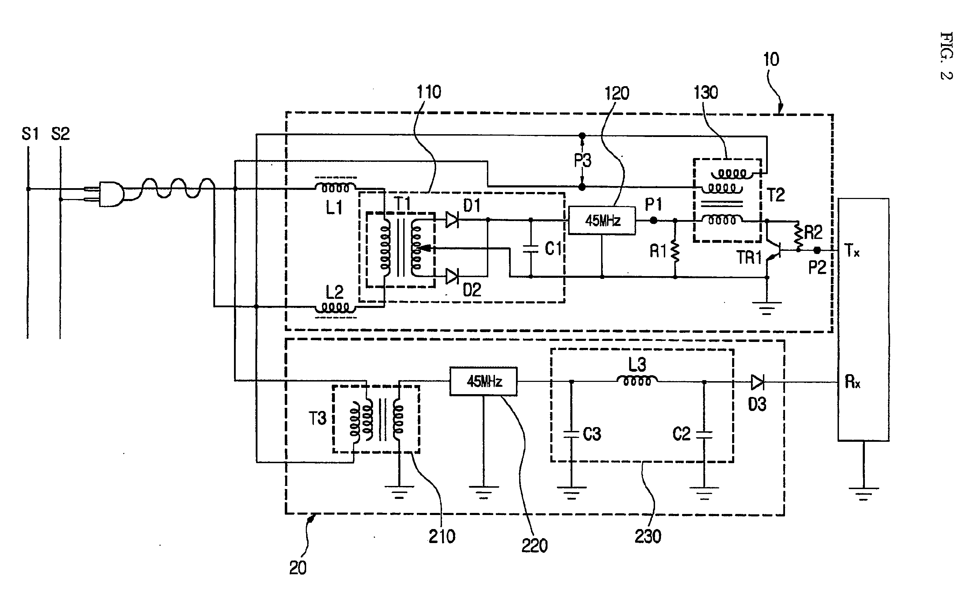

FIG 2 is a circuit diagram of an adapter for communicating over power line according to an embodiment of the present invention. As shown, the adapter for power line communications of the present invention comprises largely a transmitting unit 10 for transmitting signals to power lines S1, S2, and a receiving unit 20 for signal reception.

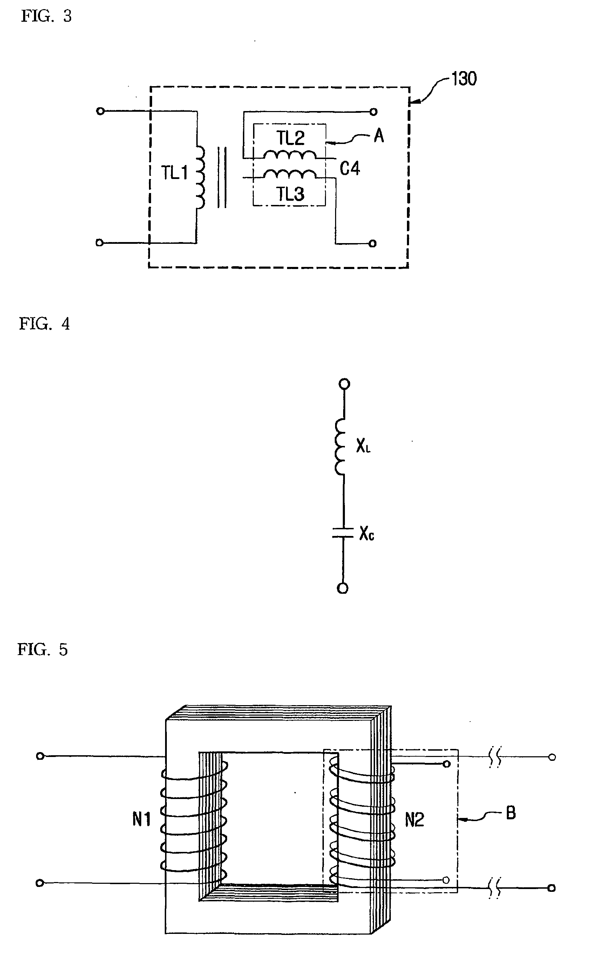

The transmitting unit 10 includes a power supply 110 for supplying DC power for driving devices, an oscillator 120 for oscillating corresponding carrier frequency, a pulse transformer 130 for signal transmission(called pulse transformer, hereinafter) for a transmission side, and a switch TR1 connected to a modem. The power supply 110 comprises a transformer T1 for dropping an input AC high voltage to an AC low voltage, rectifiers D1, D2 for rectifying the AC low voltage to change it to a DC voltage, and a smoother C1 for smoothing the DC voltage. The oscillator 120, powered by the power supply 110, oscillates a carrier frequency of 45 MHz, as an example. Although the 45 MHz is employed in the present embodiment, a certain value selected in a rage of 1MHz ~ 50 MHz is typically adopted. The switch TR1, positioned between the modem and the transmitting unit 10, employs a typical transistor for switching in response to a signal transmitted from the modem. That is, a base of the transistor TR1 is connected to the modem, a collector is connected to the pulse transformer 130 in transmission side, and an emitter is earthed. The pulse transformer 130 for the transmission side, positioned between the oscillator 120 and the transistor TR1, will be described in detail hereinafter with figures 3 to 7.

Meanwhile, the receiving unit 20 includes a pulse transformer 210 for a reception side, filter 220 for passing the carrier frequency, and a data separating unit 230 for separating transmitted data. The pulse transformer 210 for the reception side will be described with figures 3 to 7. The filter 220 means a band pass filter for passing a corresponding frequency, namely, 45 MHz frequency band. The data separating unit 230 typically includes an LC filter L3, C2, C3. Any filter which can separate signals from the modem can be employed as the data separating unit 230.

The adapter for communicating over power line is manufactured separately and then connected to the modem, or embedded within the modem to be united.

FIG 3 shows a configuration of the pulse transformer. Referring FIG. 3, the pulse transformer for transmission side comprises three coils, namely, a first coil TL1 in a first coil side, second and third coils TL2, TL3 in a second coil side. The second and third coils in the second coil side are closely separated and coupled to be a capacitor C4. The pulse transformer 210 for the reception side is identical with the one for the transmission side except the reverse positions of the first and second coil sides.

FIG 4 is an equivalent serial resonant circuit diagram. Referring FIG 4, a Q value on the output end, namely a voltage gain, can be obtained by inducing a mixed serial resonance value, $X_L + X_C$, from a voltage induced from the condenser itself in a predetermined frequency by making the condenser formed in the second coil side.

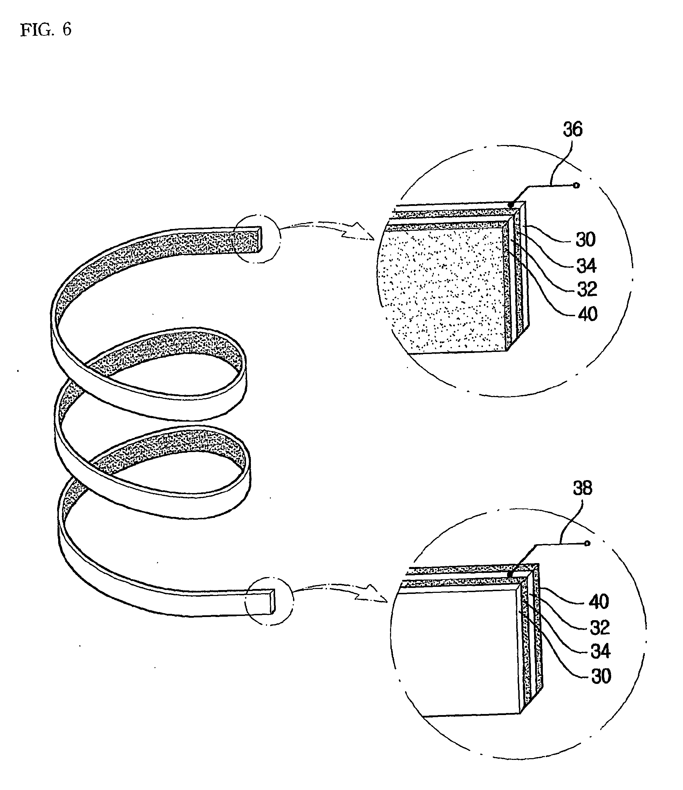

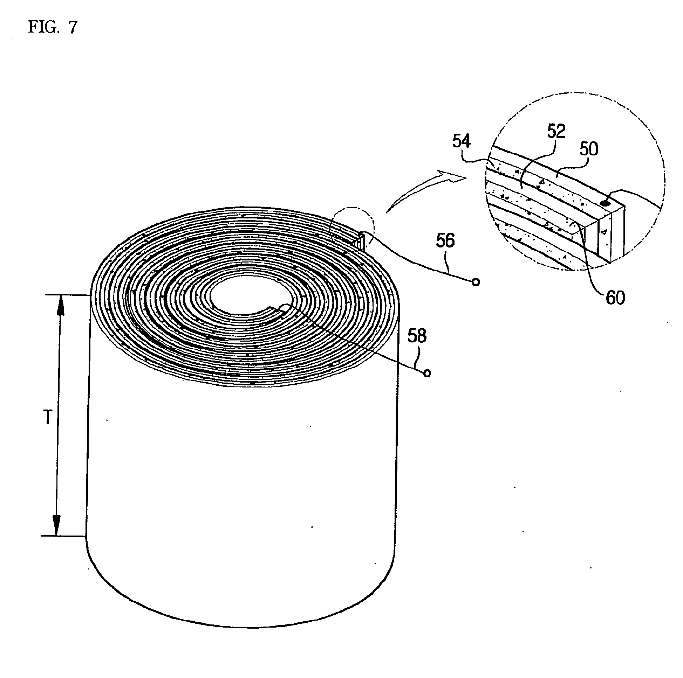

FIG 5 is a schematic diagram for the pulse transformer wound around a bedded iron core. It is comprised of a first coil side N1 and a second coil side N2 like a typical transformer. But the second order side N2 is a structure of the pulse transformer used in the present invention. Here in the present invention, in order to form the second coil side N2, first and second condenser electrodes are separated electrically by means of dielectrics or insulators and then joined together to wind around the bedded iron core like a coil. They are wound in the number of times proper to each circuit for various usage, and have a pair of or a plurality of input and output forms. Their detailed configuration is drawn in FIG 6 and 7.

FIG 6 is a configuration of B in FIG 5, a configuration of the pulse transformer for the second coil side. As shown, it, as a structure that can be applied to the second coil side of FIG 5, comprises first and second metal plate 30, 32, which are metal objects of long and plate shape and faced each other, dielectrics or insulators 34 inserted as the same shape as the metal plate between the first and second metal plates 30, 32, and first and second lead lines 36, 38 each come out from the first and second metal plates 30, 32. The transformer can be formed in the same way that the bedded iron core is wound with coils, as shown in FIG 5. When winding coils, the dielectrics or insulators 40 can be additionally joined to one exposed side of the two metal plates 30, 32, because the two metal plates 30, 32 can be short according to a winding method of coils.

FIG 7 is a configuration of B in FIG 5, the other configuration of the pulse transformer for the second coil side. Referring FIG 7, first and second metal plates 50, 52, dielectrics or insulators 54, first and second lead lines 56, 58 are all formed similarly or identically to the one shown in FIG 6. The only difference is in that they have larger areas than the ones of FIG 6. Namely, They have a length T long enough to wind around the bedded iron core. As the case of FIG 6, when winding coils, the dielectric or insulator 60 can be additionally joined to the exposed side of the two metal plates 50, 52, because the two metal plates 50, 52 can be short according to a winding method of coils.

The operations of the pulse transformer are described with reference to FIG 5 to 7.

The pulse transformer of the present invention has a configuration of that an internal impedance of the second coil side is absolutely raised with no relation to the number of winding times of the first and second coils. For example, if, in high frequencies of tens of MHz, a coil line, winding around a perforated bobbin whose diameter is 10mm at 40 times, has inductance of about 100mH, the induced inductance becomes 6.2 kl. When manufacturing a transformer having the configuration as shown in FIG 6 or 7 according to the present invention, on the contrary, the transformer can obtain relatively higher impedance under the same condition. That is, as shown in FIG 6 and 7, when forming a condenser comprised of dielectrics or insulators between two plane conductive films, winding the second coil around the condenser, as the 40 times coil winding around the perforated bobbin whose diameter is 10mm, and then installing electrodes at both ends of the conductive films, a voltage, proportional to the number of winding times, is charged to and discharged from the condenser repeatedly. At the same time, the induced reactance corresponding to the winding times of the coil becomes realized in a single object like a composite circuit having $X_L + X_C$. At this time, due to a characteristic of discharge of the condenser even to an infinite external resistor, a second coil side output structure having the internal impedance of several or more $M\Omega$ becomes realized. Their equivalent values N2 and N4 to the ones of FIG. 4 are decided by the following equation (1).

$$\tau r = \frac{1}{2\pi \times LC} \qquad (1)$$

As the equation of (1), a serial resonant frequency according to a predetermined frequency is calculated and consequently a voltage gain is amplified like the following equation (2).

$$Q = \frac{VL}{V} = \frac{VC}{V} = \frac{Wr}{R} = \frac{1}{WrcR} = \frac{1}{R} \times \frac{L}{c} (2)$$

Since a signal of the second coil side can be larger than the one of the first coil side and the value proportional to the winding times, it can be implemented as an amplifier for the predetermined frequency.

Consequentially, when signals are transmitted and received by means of the pulse transformer installed in the transmission and reception sides, the internal impedance between the two pulse transformers becomes several $M\Omega$ so that signal attenuation can be minimized. This is resulted from the fact that the higher the Internal impedance of the pulse transformer for the transmission side is, the easier the signal can be transmitted through a long distance transmission line. In addition, a voltage can be charged to the condenser of the pulse transformer for the reception side where the signal can be received in a relatively low noise level. This fact is the most important in the power line communications. That is, without being affected by various noises through AC lines, relatively longer transmission distance can be maintained so that signal attenuation can be minimized and then strong signal can also be maintained.

When signal transmitting, electromagnetic induction is performed in the pulse transformer for the reception side according to the electromagnetic induction performed in the pulse transformer for the transmission side. However, one operation between signal transmission and reception, not both simultaneously, is accomplished due to controls by the modem. Therefore, the transmission signal doses not affect to the reception signal and vice versa.

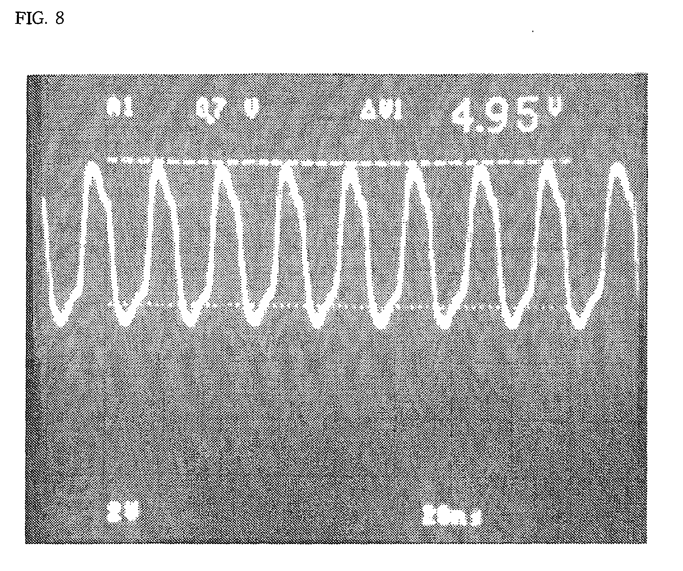

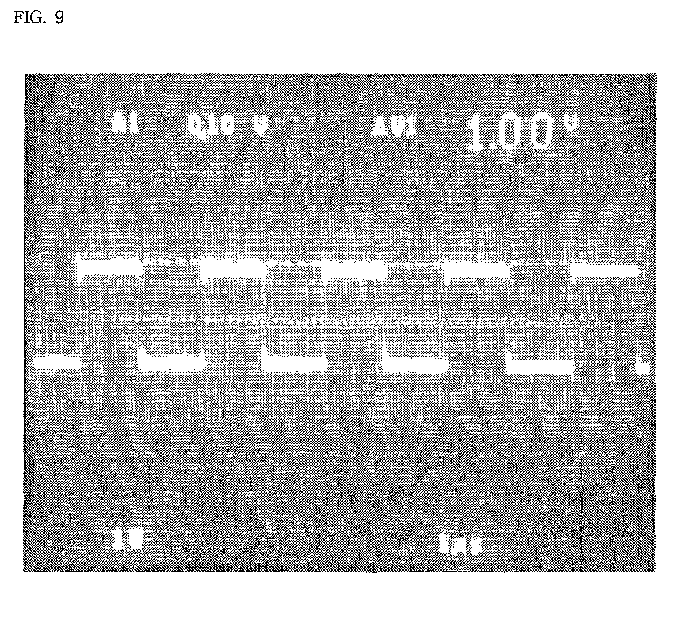

FIG 8 shows a waveform of a carrier frequency output from a P1 point of FIG 2. FIG 9 shows a synthesized waveform of a carrier frequency and a data signal output from a P3 point of FIG 2.

According to an adapter for power line communications of the present invention, by employing a condenser component as the input and output ends of the transformer, the internal Impedance can be raised so that signal attenuation and noise effect of the transmission lines can largely reduced.

## Claims

1. An adapter for communicating over power line, comprising:

   a transmitting unit (10) comprising a transformer (T1), connected to power lines, for dropping an input AC high voltage into an AC low voltage; a plurality of rectifiers (D1, D2) for rectifying the AC low voltage to convert the same to a DC voltage; a smoother for smoothing the DC voltage (C1); an oscillator (120) for oscillating a carrier frequency for signal transmission; a switching unit (TR1, R2) for switching corresponding to a signal transmitted from a modem; a first coil (TL1) wound around a core, said first coil (TL1) positioned between the switching unit (TR1, R2) and the oscillator (120), for combining the carrier frequency and data transmitted from the switching unit (TR1, R2) and magnetizing the combined result; and a first pulse transformer (130) comprising first and second condenser electrodes, which are induced electromagnetically by the first coil (TL1) and separated mutually and electrically by means of dielectrics or insulators and said electrodes being joined together to wind around the core like a coil (TL2, TL3), said condenser electrodes including first and second lead lines respectively, each connected to the power lines for signal transmission; and
   a receiving unit (20) comprising a second pulse transformer (210) having a third condenser electrode for connecting a third lead line to the power line to which the first lead line is connected, a fourth condenser electrode for preventing short with the third condenser electrode by means of dielectrics or insulators and connecting a fourth lead line to the power line to which the second lead line is connected, and a second coil induced electromagnetically by a third and fourth condenser electrodes; a filter (230) for passing the carrier frequency of data among signals output from the second pulse transformer (210); and a data separating unit for separating transmission data between the filter (230) and the modem.

2. An adapter as claimed in Claim 1, wherein the data separating unit is an LC filter.

## Patentansprüche

1. Adapter zur Kommunikation über eine Stromversorgungsleitung umfassend:

   eine Sendeeinheit (10), umfassend einen mit Stromversorgungsleitungen verbundenen Transformator (T1) zum Herabsetzen einer Eingangs-Wechsel-Hochspannung auf eine Wechsel-Niederspannung; eine Mehrzahl von Stromrichtern (D1, D2) zum Gleichrichten der Wechsel-Niederspannung, um dieselbe in eine Gleichspannung umzuwandeln; ein Glättungsglied zum Glätten der Gleichspannung (C1), einen Oszillator (120) zum Oszillieren einer Trägerfrequenz zur Signalübertragung; eine Schalteinheit (TR1, R2) zum Schalten in Übereinstimmung mit einem von einem Modem übertragenen Signal; einer ersten um einen Kern gewickelten Spule (TL1), wobei die erste Spule (TL1) zwischen der Schalteinheit (TR1, R2) und dem Oszillator (120) angeordnet ist, um die Trägerfrequenz und von der Schalteinheit (TR1, R2) übertragene Daten zu kombinieren und das kombinierte Ergebnis zu magnetisieren; und einen ersten Impulsübertrager (130), der eine erste und eine zweite Kondensatorelektrode umfasst, welche elektromagnetisch durch die erste Spule (TL1) induziert werden und die gegeneinander und elektrisch mittels Dielektrika oder Isolatoren getrennt sind, und wobei die Elektroden miteinander verbunden sind, um sich um den Kern wie eine Spule (TL2, TL3) zu winden, wobei die Kondensatorelektroden eine erste bzw. eine zweite Anschlussleitung umfassen, wobei jede mit den Stromversorgungsleitungen zur Signalübertragung verbunden ist; und

eine Empfangseinheit (20) umfassend einen zweiten Impulsübertrager (210) mit einer dritten Kondensatorelektrode zum Verbinden einer dritten Anschlussleitung mit der Stromversorgungsleitung, mit welcher die erste Anschlussleitung verbunden ist, eine vierte Kondensatorelektrode, die mittels Dielektrika oder Isolatoren vor einem Kurzschluss mit der dritten Kondensatorelektrode geschützt ist und die durch eine vierte Anschlussleitung mit der Stromversorgungsleitung verbunden ist, mit welcher die zweite Anschlussleitung verbunden ist, und eine zweite Spule, die durch eine dritte und eine vierte Kondensatorelektrode elektromagnetisch induziert ist; einen Filter (230) zum Durchlassen der Trägerfrequenz der Daten unter Signalen, welche von dem zweiten Impulsübertrager (210) ausgegeben werden, und eine Datentrenneinheit zum Trennen der Übertragungsdaten zwischen dem Filter (230) und dem Modem.

**2.** Adapter nach Anspruch 1, wobei die Datentrenneinheit ein LC-Filter ist.

**Revendications**

**1.** Adaptateur pour communiquer sur une ligne électrique, comprenant :

une unité de transmission (10) comprenant un transformateur (11), connecté aux lignes électriques, pour faire chuter une haute tension CA entrée en une basse tension CA ; une pluralité de redresseurs (Dl, D2) pour redresser la basse tension CA et convertir celle-ci en une tension CC ; un lisseur pour lisser la tension CC (C1) ; un oscillateur (120) pour faire osciller une fréquence porteuse pour la transmission de signaux ; une unité de commutation (TRI, R2) pour commuter correspondant à un signal émis à partir d'un modem ; une première bobine (TL1) enroulée autour d'un noyau, ladite première bobine (TL1) placée entre l'unité de commutation (TRI, R2) et l'oscillateur (120), pour combiner la fréquence porteuse et les données transmises de l'unité de commutation (TRI, R2) et magnétiser le résultat combiné ; et un premier transformateur d'impulsions (130) comprenant des premières et deuxièmes électrodes de condenseur, qui sont induites électromagnétiquement par la première bobine (TL1) et séparées mutuellement et électriquement au moyen des diélectriques ou d'isolateurs et lesdites électrodes étant jointes ensemble pour s'enrouler autour du noyau comme une bobine (TL2, TL3), lesdites électrodes de condenseur comprenant des première et deuxième lignes principales respectivement, chacune étant reliée aux lignes électriques pour la transmission de signaux ; et une unité de réception (20) comprenant un deuxième transformateur d'impulsions (210) ayant une troisième électrode de condenseur pour connecter une troisième ligne principale à la ligne électrique à laquelle la première ligne principale est connectée, une quatrième électrode de condenseur pour empêcher les courts-circuits avec la troisième électrode de condenseur au moyen de diélectriques ou d'isolateurs et connecter une quatrième ligne principale à la ligne électrique à laquelle la deuxième ligne principale est connectée, et une deuxième bobine induite électromagnétiquement par une troisième et une quatrième électrode de condenseur ; un filtre (230) pour transmettre la fréquence porteuse de données parmi les signaux envoyés en sortie du deuxième transformateur d'impulsions (210) ; et une unité de séparation des données pour séparer les données de transmission entre le filtre (230) et le modem.

**2.** Adaptateur selon la revendication 1, dans lequel l'unité de séparation des données est un filtre LC.

FIG. 1

FIG. 2

FIG. 3

FIG. 4

FIG. 5

FIG. 6

FIG. 7

FIG. 8

FIG. 9

FIG. 10